## Europäisches Patentamt
## European Patent Office
## Office européen des brevets

(19)

(11) Veröffentlichungsnummer: **0 088 371**
**B1**

(12)

# EUROPÄISCHE PATENTSCHRIFT

(45) Veröffentlichungstag der Patentschrift:
**04.06.86**

(21) Anmeldenummer: **83102075.5**

(22) Anmeldetag: **03.03.83**

(51) Int. Cl.⁴: **F 15 B  5/00,** G 05 D  16/20,
F 16 K  31/06

(54) Vorrichtung zur Umformung eines elektrischen Signales in ein pneumatisches Drucksignal.

(30) Priorität: **04.03.82  DE 8205982 U**

(43) Veröffentlichungstag der Anmeldung:
**14.09.83 Patentblatt 83/37**

(45) Bekanntmachung des Hinweises auf die Patenterteilung:
**04.06.86 Patentblatt 86/23**

(84) Benannte Vertragsstaaten:
**CH DE GB LI SE**

(56) Entgegenhaltungen:
**DE - A - 2 102 197
DE - B - 2 054 218
FR - E - 82 398
US - A - 3 185 167**

(73) Patentinhaber: **HONEYWELL GMBH,
Kaiserleistrasse 55, D-6050 Offenbach am Main (DE)**

(72) Erfinder: **Hary, Günter, Barbaraossastrasse 42,
D-6458 Rodenbach 2 (DE)**

(74) Vertreter: **Herzbach, Dieter et al, Honeywell Europe S.A.
Holding KG Patent- und Lizenzabteilung
Kaiserleistrasse 55 Postfach 184, D-6050 Offenbach am
Main (DE)**

## Beschreibung

Die vorliegende Erfindung betrifft eine Vorrichtung nach dem Gattungsbegriff des Patentanspruches 1.

Eine derartige Vorrichtung ist aus der FR-E 82 398 bekannt. Dort ist die Prallplatte als Waagebalken ausgebildet, wobei der Waagebalken mit einem Ende die Düse abdeckt und mit dem anderen Ende des Waagebalkens die Tauchspule verbunden ist. Je nach Richtung des die Tauchspule durchfliessenden Stromes wird diese in einen Magneten gezogen bzw. aus diesem herausbewegt, so dass hinter einer Drosselstelle, über die Zuluft der Düse zugeführt wird, ein Druck entnommen werden kann, der dem der Tauchspule zugeführten Strom proportional oder umgekehrt proportional ist. Auf Grund des Waagebalkensystems kann im nicht erregten Zustand der Tauchspule ein genauer Abgleich vorgenommen werden, so dass die Kennlinie des umgeformten Drucksignales proportional und durch den Nullpunkt verläuft.

Aus der US-A 3 185 167 ist ein elektropneumatischer Umformer bekannt, bei dem die Prallplatte als Scheibenfeder ausgebildet ist und eine aus der Mitte der Scheibenfeder versetzte druckluftgespeiste Düse abdeckt. Ein Magnet wirkt über einen Anker auf die Scheibenfeder ein.

Ausgehend von der eingangs genannten bekannten Vorrichtung ist es die Aufgabe der vorliegenden Erfindung, diese so zu verbessern, dass sie bei einem kompakten, preiswerten und montagemässig einfachen Aufbau ebenfalls ein streng proportionales Ausgangssignal liefert.

Die Lösung dieser Aufgabe gelingt gemäss der im Anspruch 1 gekennzeichneten Erfindung. Weitere vorteilhafte Ausgestaltungen der neuen Vorrichtung sind den Unteransprüchen entnehmbar.

Anhand eines in den Figuren der beiliegenden Zeichnung dargestellten Ausführungsbeispieles sei im folgenden die Erfindung näher beschrieben. Es zeigen:

Fig. 1 einen stark vergrösserten Teil-Längsschnitt durch einen Umformer gemäss der Erfindung; und

Fig. 2 eine Draufsicht auf die verwendete Scheibenfeder.

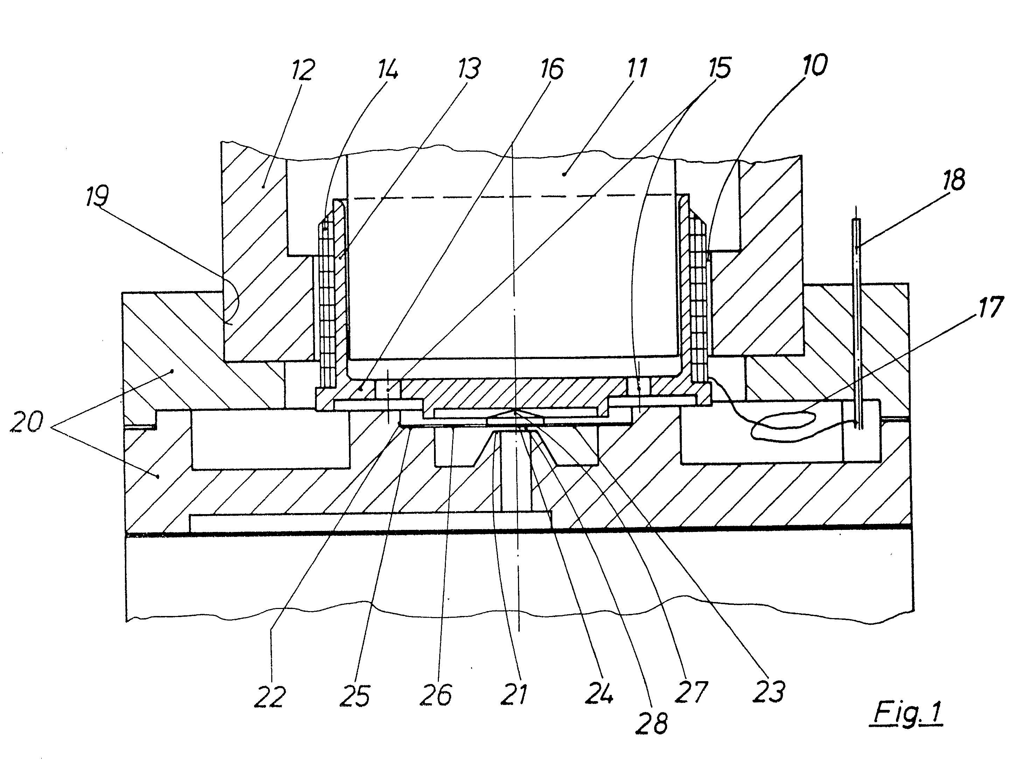

Gemäss Fig. 1 ist eine Tauchspule in einem ringförmigen Luftspalt 10 eines Magneten verschiebbar, wobei der Magnet aus einem Permanentmagnetkern 11 und einem topfförmigen Teil 12 besteht und die Tauchspule eine auf einen Spulenkörper 13 gewickelte Spule 14 umfasst. Der Spulenkörper 13 ist topfförmig ausgebildet und weist in seinem Boden 16 Entlüfungsöffnungen 15 auf, durch die bei einer Bewegung des Spulenkörpers 13 in Richtung auf den Kern 11, die dazwischen befindliche Luft entweichen kann. Die Spule 14 ist über flexible Leitungen 17 an Anschlussstifte 18 angeschlossen.

Der Magnet 11, 12 sitzt ortsfest in einer Ausnehmung 19 eines zweiteiligen Gehäuses 20. Zentral unter der Tauchspule 13, 14 befindet sich eine Düse 21, der gedrosselte Zuluft zugeführt wird. Konzentrisch zur Düse 21 ist von oben her eine Eindrehung 22 in dem Gehäuse 20 angebracht, deren Boden geringfügig höher als der Rand der Düse 21 liegt. In diese Eindrehung 22 ist eine Scheibenfeder 23 eingelegt. Die Tiefe der Eindrehung 22 ist grösser als der maximale Hub der Tauchspule 13, 14, so dass die Scheibenfeder 23 durch die Zuluft nicht aus der Eindrehung 22 herausgehoben werden kann.

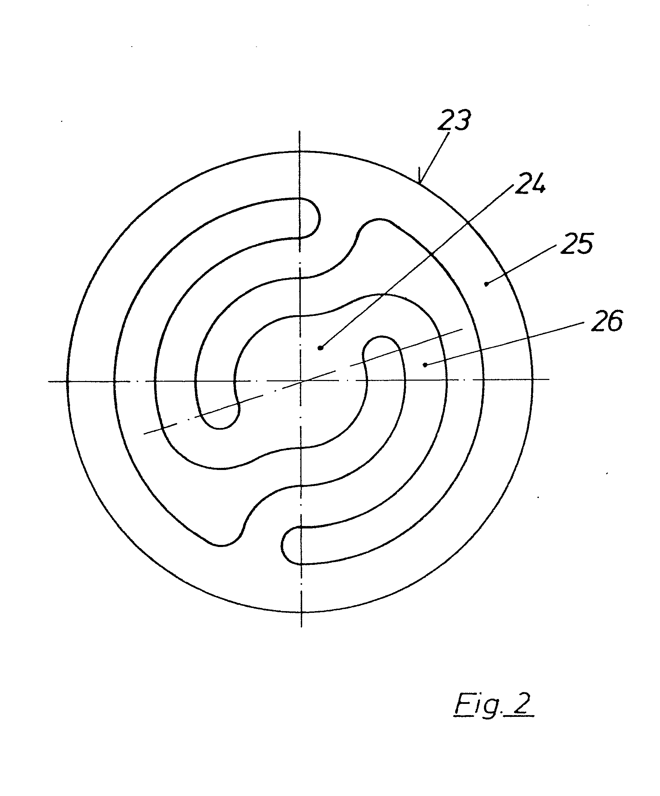

Die Scheibenfeder 23 weist gemäss Fig. 2 eine zentrale kreisförmige Prallplatte 24 und einen peripheren Stützrand 25 auf. Die Prallplatte 24 ist mit dem Stützrand 25 über mäanderförmige Arme 26 verbunden, deren Länge grösser als der radiale Abstand des Stützrandes 25 von der Prallplatte 24 ist und die bei entspannter Feder in der gleichen Ebene wie die Prallplatte 24 und der Stützrand 25 liegen. Die Scheibenfeder 23 besteht insgesamt aus unmagnetischem Federblech, z.B. aus Kupfer-Beryllium und sie wird vorzugsweise durch ein Ätzverfahren hergestellt.

Gemäss Figur 1 ist auf der Prallplatte 24 ein Spitzenlager 27 angeordnet, auf dem sich der Boden 16 des Spulenkörpers 13 abstützt. Zwischen dem Zentralen Teil 24 der Scheibenfeder 23 und der Düse 21 besteht im unbelasteten Zustand ein Abstand 28, der dem durch das Spulengewicht hervorgerufenen Federweg entspricht.

## Patentansprüche

1. Vorrichtung zur Umformung eines elektrischen Signales in ein pneumatisches Drucksignal mit einem Tauchspul/Magnet-System (11, 13, 14), bei welchem die Tauchspule (13, 14) bei ihrer Erregung in bezug auf den Magneten (11) eine Bewegung erfährt, und mit einem von dem Tauchspul/Magnet-System beaufschlagten Düse/Prallplatte-System (21, 24), wobei die Düse (21) mit gedrosselter Zuluft gespeist und das pneumatische Drucksignal hinter der Drosselstelle entnommen wird, gekennzeichnet durch folgende Merkmale:

a) die Prallplatte (24) ist als zentrales Teil einer umfangsseitig am Gehäuse (20) abgestützten Scheibenfeder (23) ausgebildet;
b) die Düse (21), die Scheibenfeder (23) und die Tauchspule (13, 14) sind vertikal und koaxial übereinander angeordnet, wobei sich die Tauchspule auf dem zentralen Teil (24) der Scheibenfeder (23) abstützt;
c) die Scheibenfeder (23) ist derart ausgebildet, dass zwischen dem zentralen Teil (24) und der Düse (21) im unbelasteten Zustand der Scheibenfeder (23) ein Abstand (28) besteht, der dem durch das Gewicht der Tauchspule (13, 14) hervorgerufenen Federweg entspricht.

2. Vorrichtung nach Anspruch 1, dadurch gekennzeichnet, dass zwischen dem zentralen, die Düse (21) abdeckenden Teil (24) und einem peripheren Stützrand (25) der Scheibenfeder (23) in der gleichen Ebene liegende Arme (26) angeordnet sind, deren Länge grösser als der Abstand des Stützrandes vom zentralen Teil ist.

3. Vorrichtung nach Anspruch 2, gekennzeichnet durch eine Ausbildung der Scheibenfeder (23) als Formätzteil.

4. Vorrichtung nach Anspruch 3, dadurch gekennzeichnet, dass die Scheibenfeder (23) aus unmagnetischem Federblech besteht.

5. Vorrichtung nach Anspruch 2, dadurch gekennzeichnet, dass die Scheibenfeder (23) in einer kreisförmigen zu der Düse (21) konzentrischen Gehäuseausnehmung (22) angeordnet ist.

6. Vorrichtung nach Anspruch 5, dadurch gekennzeichnet, dass die Tiefe der Gehäuseausnehmung (22) grösser als der Verschiebeweg der Tauchspule (13, 14) ist.

7. Vorrichtung nach einem der Ansprüche 1 bis 6, dadurch gekennzeichnet, dass auf dem zentralen Teil (24) der Scheibenfeder (23) ein Spitzenlager (27) angeordnet ist, auf dem sich die Tauchspule (13, 14) abstützt.

8. Vorrichtung nach Anspruch 7, dadurch gekennzeichnet, dass die Tauchspule einen auf einen topfförmigen Spulenkörper (13) gewickelte Spule (14) aufweist, dass der Spulenkörper (13) über den Kern (11) eines Permanentmagneten (12) geschoben ist und dass der Boden (16) des Spulenkörpers (13) Entlüftungsöffnungen (15) aufweist.

## Claims

1. Device for transforming an electric signal into a pneumatic pressure signal comprising a moving coil/magnet system (11, 13, 14) at which the moving coil (13, 14) at its energizing is displaced with respect to the magnet (11) and comprising a nozzle/baffle plate system (21, 24) being admitted by the moving coil/magnet system, whereat the nozzle (21) is fed by throttled supply air and the pneumatic pressure signal is taken from the line behind the throttle, characterized by the following features:

a) the baffle plate (24) is formed as a central portion of a disk spring (23) being supported at its circumference by the housing (20);
b) the nozzle (21), the disk spring (23) and the moving coil (13, 14) are vertically and coaxially arranged with respect to each other, whereat the moving coil is supported by the central portion (24) of the disk spring (23);
c) the disk spring (23) is designed in such a way that at a relaxed condition of the disk spring (23) a distance (28) exists between the central portion (24) and the nozzle (21) which equals the spring deflection caused by the weight of the moving coil (13, 14).

2. Device according to claim 1, characterized in that between the central portion (24) covering the nozzle (21) and a peripheral supporting rim (25) of the disk spring (23) arms (26) are provided in the same plane with the length of said arms being greater than the distance of the supporting rim from the central portion.

3. Device according to claim 2, characterized by the disk spring (23) being formed in an etching process.

4. Device according to claim 3, characterized in that the disk spring (23) consists of a nonmagnetic spring plate.

5. Device according to claim 2, characterized in that the disk spring (23) is arranged in an annular recess (22) of said housing with said recess being concentrical to the nozzle (21).

6. Device according to claim 5, characterized in that the depth of the recess (22) within said housing is greater than the maximum displacement of the moveable coil (13, 14).

7. Device according to one of claims 1 to 6, characterized in that a conical bearing (27) is arranged on the central portion (24) of the disk spring (23) with the moveable coil (13, 14) abutting against said bearing.

8. Device according to claim 7, characterized in that the moveable coil comprises a coil (14) wrapped on a cup-shaped coil case (13) that the coil case (13) is shifted on the core (11) of a permanent magnet (12) and that the bottom (16) of the coil case (13) is provided with venting openings (15).

## Revendications

1. Dispositif pour transformer un signal électrique en un signal pneumatique de pression, comportant un système à bobine plongeante et aimant (11, 13, 14), dans lequel la bobine plongeante (13, 14) subit un déplacement par rapport à l'aimant (11) lorsqu'elle est excitée, et un système à tuyère/palette (21, 24), actionné par le système à bobine/aimant, la tuyère (21) étant alimentée par le l'air soumis à un étranglement et le signal pneumatique de pression étant prélevé en aval du point d'étranglement, caractérisé par les caractéristiques suivantes:

a) la palette (24) est constituée par la partie centrale d'une rondelle élastique (23) prenant appui sur son pourtour contre le boîtier (20);
b) la tuyère (21), la rondelle élastique (23) et la bobine plongeante (13, 14) sont superposées verticalement et coaxialement, la bobine plongeante prenant appui sur la partie centrale (24) de la rondelle élastique,
c) la rondelle élastique (23) est agencée de telle sorte que lorsqu'elle se trouve à l'état non chargé, il existe entre la partie centrale (24) et la tuyère (21) un écartement (28) qui correspond à la course de déplacement élastique produite sous le poids de la bobine mobile (13, 14).

2. Dispositif selon la revendication 1, caractérisé en ce qu'entre la partie centrale (24) recouvrant la tuyère (21) et un bord périphérique d'appui (25) de la rondelle élastique (23) se trouvent disposés des bras (26) situés dans le même plan et dont la longueur est supérieure à l'écartement entre le bord d'appui et la partie centrale.

3. Dispositif selon la revendication 2, caractérisé par une réalisation de la rondelle élastique (23) comme pièce de forme réalisée par corrosion.

4. Dispositif selon la revendication 3, caractérisé en ce que la rondelle élastique (23) est constituée par une tôle à ressorts amagnétique.

5. Dispositif selon la revendication 2, caractérisé en ce que la rondelle élastique (23) est disposée dans un logement circulaire du boîtier (22), concentrique à la tuyère (21).

6. Dispositif selon la revendication 5, caractérisé en ce que la profondeur du logement (22) du boîtier est supérieure à la course de coulissement de la bobine plongeante (13, 14).

7. Dispositif selon l'une des revendications 1 à 6, caractérisé en ce qu'on ménage sur la partie centrale (24) de la rondelle élastique (23) un palier à pointe (27) sur lequel prend appui la bobine plongeante (13, 14).

8. Dispositif selon la revendication 7, caractérisé en ce que la bobine plongeante comprend une bobine (14) enroulée sur un corps de bobine (13) en forme de pot, que le corps de bobine (13) est emmanché sur le noyau (11) d'un aimant permanent (12) et que le fond (16) du corps de bobine (13) comporte des ouvertures d'aération (15).

Fig. 1

*Fig. 2*